# EUROPEAN PATENT SPECIFICATION

(11) **EP 3 955 722 B1**
(45) Date of publication and mention of the grant of the patent: **13.05.2026**
(21) Application number: 20725906.0
(22) Date of filing: 14.04.2020
(51) Int. Cl.: A01B 59/00, B60D 1/04

(54) **FASTENING DEVICE FOR TOWING VEHICLES**
BEFESTIGUNGSVORRICHTUNG FÜR SCHLEPPFAHRZEUGE
DISPOSITIF DE FIXATION POUR REMORQUER DES VÉHICULES

(30) Priority: 16.04.2019 IT 201900005836
(43) Date of publication of application: 23.02.2022
(73) Proprietor: CBM - S.P.A., 41122 Modena (IT)
(72) Inventor: CORNIA, Enrico Maria, 41122 Modena (MO) (IT)
(74) Representative: Zoli, Filippo
(86) International application number: PCT/IB2020/053490
(87) International publication number: WO 2020/212833

(56) References cited:
- EP-A1- 1 604 558
- DE-U1- 20 107 859
- US-A- 3 498 638
- US-A- 3 544 133
- US-A- 4 549 744
- US-A1- 2001 037 759

## Description

### Technical Field

The present invention relates to a fastening device for towing vehicles, particularly for an agricultural or industrial vehicle.

### Background Art

In particular, the present invention relates to a lower fastening device for a three-point hitch towing system.

Such fastening devices generally consist of a main body, in which a housing seat is obtained for a coupling ball of a towing apparatus, and of a fastening element which, when engaged with the apparatus, allows it to be towed.

The fastening element is movable with respect to the main body between an engagement configuration and a release configuration to allow the engagement and release thereof with the apparatus to be towed, respectively.

The fastening element is kinematically connected to a control lever, which is movable with respect to the main body to displace the fastening element from the engagement position to the release configuration and vice versa. The control lever is connected at least in rotation to the fastening element around a first axis, e.g. by means of a relevant pin. In particular, the control lever is pulled outwards and, by partly rotating around the pin, allows the fastening element to be moved between the engagement configuration and the release configuration. Between the main body and the control lever there are elastic means adapted to counteract the displacement of the control lever adapted to bring the fastening element from the engagement configuration to the release configuration.

The control lever can be further moved between a locking position, wherein it keeps the fastening element in the release configuration, and a home position, wherein it allows the movement of the fastening element between the engagement configuration and the release configuration.

In order to reach the locking position, the control lever rotates further with respect to the fastening element around the aforementioned first axis or around a second axis parallel thereto, counteracting the elastic means.

However, this type of fastening device has some drawbacks.

In fact, the control lever is difficult to maneuver between the locking position and the home position, as it is necessary to act with force thereon to counteract the elastic means and allow the return of the fastening element to the engagement configuration.

In addition, in the locking position, the control lever is protruding from the main body and can intercept any external bodies with the risk of causing damage, injury and/or breaking in turn.

Furthermore, this type of fastening devices is generally of complex manufacture and has a high number of components, often small in size, which also makes complex and difficult any replacement of damaged or malfunctioning components.

These fastening devices, therefore, require to be disassembled from the towing vehicle before any maintenance work can be carried out, with an increase in time and costs associated therewith.

In the light of the above considerations, it is clear that the above mentioned fastening devices of known type are susceptible to further refinements aimed at allowing the towing of an apparatus, in a practical, efficient and cost effective manner.

The previous documents US 2001/037759 A1, US 3 544 133 A, US 3 498 638 A and US 4 549 744 A describe fastening devices for towing vehicles in which the control lever is connected to the relevant fastening element by means of an intermediate linkage. In the embodiments described in these documents, the control lever is associated in rotation with the relevant intermediate linkage around a single axis of rotation. The control lever can therefore rotate with respect to the relevant fastening element around a single axis of rotation.

### Description of the Invention

The main aim of the present invention is to devise a fastening device for towing vehicles that allows a practical and safe fastening of an apparatus to be towed. Within this aim, one object of the present invention is to devise a fastening device for towing vehicles that allows reducing the risk of damage, during use, in the event of a shock with external bodies.

Another object of the present invention is to devise a fastening device for towing vehicles that is simple to implement and allows a reduction in time and costs related to the maintenance interventions compared to the devices known today.

Another object of the present invention is to devise a fastening device for towing vehicles that allows overcoming the above mentioned drawbacks of the prior art within a simple, rational, easy, effective to use and low cost solution. The objects set out above are achieved by the present fastening device for towing vehicles having the characteristics of claim 1.

### Brief Description of the Drawings

Other characteristics and advantages of the present invention will be more evident from the description of a preferred, but not exclusive, embodiment of a fastening device for towing vehicles, illustrated by way of an indicative, but non-limiting example, in the attached tables of drawings in which:
Figures 1-4 represent an axonometric view of a first embodiment of the fastening device according to the invention in different configurations of use;
Figure 5 is an axonometric view of a detail of the fastening device according to the invention;
Figure 6 is an axonometric view of a second embodiment of the present invention;
Figure 7 is an axonometric view of a third embodiment of the present invention.

### Embodiments of the Invention

With particular reference to these figures, reference numeral 1 globally indicates a fastening device for towing vehicles.

The device 1 comprises at least one main body 2 comprising at least one housing seat 3 for an apparatus to be towed.

The housing seat 3 is hook-shaped and is adapted to receive, for example, a special coupling ball of the apparatus to be towed (not shown in the figures).

In addition, the main body 2 comprises at least one main portion 4, defining at least one cavity 5, and at least one cover 6, adapted to close at least partly said cavity 5. The cavity 5 is communicating with the housing seat 3 through a first opening 5a.

The main portion 4, through the cover 6, allows defining a seat for the containment of the various components of the device 1, so that the assembly or disassembly thereof is easy even when the main body 2 is installed on the towing vehicle.

The device 1 comprises at least one fastening element 7 associated in a movable manner with the main body 2 between at least one release configuration, in which it releases the housing seat 3 to allow the insertion/removal of the apparatus to be towed, and at least one engagement configuration, in which it obstructs at least partly the housing seat 3 to prevent the removal of the apparatus to be towed.

In particular, the fastening element 7 is housed inside the cavity 5 in the release configuration and passes through the first opening 5a to reach the engagement configuration, in which it protrudes from the cavity 5 itself.

In addition, the main body 2 comprises at least one holding element 8, on which the fastening element 7 rests, which is placed inside the cavity 5 and adapted to be inserted into a coupling seat 9 defined on the fastening element itself in order to keep the latter in the engagement configuration.

The holding element 8 has the function of supporting the fastening element 7 and keeping it in the engagement configuration thus preventing any undesired movements caused by the stresses received during the towing operations.

The cover 6 and the holding element 8 operate as a guide for the movement of the fastening element 7 through the first opening 5a.

In particular, the main portion 4, in the proximity of the first opening 5a, has a sliding surface 4a along which the fastening element 7 is guided on top during the movement between the engagement configuration and the release configuration and, in the same way, is guided below by the holding element 8.

This way, the fastening element 7 is constrained to follow a defined trajectory.

This sliding surface 4a is also the reaction surface against which the fastening element 7 rests when the latter, in the engagement configuration, is urged by the apparatus to be towed inserted in the housing seat 3. The sliding surface 4a thus prevents the fastening element 7, when this is in the engagement configuration, from re-entering the cavity 5 as a result of the thrusts received by the apparatus to be towed.

In addition, the device 1 comprises at least one control lever 10 connected at least in rotation to the fastening element 7 around a first axis X, and movable with respect to the main body 2 to displace the fastening element 7 from the engagement configuration to the release configuration and vice versa.

Advantageously, the device 1 comprises elastic means 11 interposed between the fastening element 7 and the main body 2 and adapted to counteract the movement of the fastening element itself towards the release configuration.

In particular, the elastic means 11 are of the type of a spring connected through a first end to the fastening element 7 and through a second end to the main body 2.

It cannot however be ruled out that the first end of the spring 11 can be connected to the control lever 10.

The control lever 10 is also housed at least partly inside the cavity 5, which has a second opening 5b facing outwards and through which the control lever itself passes.

More in detail, the control lever 10 has at least one connecting portion 10a with the fastening element 7 and at least one gripping portion 10b accessible from the outside. The connecting portion 10a and the gripping portion 10b are adapted, respectively, to be contained inside the cavity 5 and to protrude from the cavity itself when the fastening element 7 is in the engagement configuration.

Appropriately, the gripping portion 10b has a projection 12 adapted to operate in conjunction with the main body 2 to close the second opening 5b when the fastening element 7 is in the engagement configuration.

The control lever 10 is further movable between a locking position, in which it operates in conjunction with the main body 2 to keep the fastening element 7 in the release configuration, and a home position, in which it is movable with respect to the main body 2 to allow the displacement of the fastening element 7. In order to move the fastening element 7 from the engagement configuration to the release configuration, the control lever 10 is pulled outwards counteracting the elastic means 11.

The fastening element 7 can also displace from the engagement configuration to the release configuration and vice versa in an independent manner, as a result of the insertion of the apparatus to be towed in the housing seat 3. In particular, when the fastening element 7 is in the engagement configuration, the insertion of the apparatus to be towed into the housing seat 3 causes the fastening element itself to progressively retract inside the cavity 5 until it reaches the release configuration; when the apparatus to be towed reaches its final position in the housing seat 3, the fastening element 7, as a result of the action of the elastic means 11, returns to the engagement configuration so as to hold the apparatus to be towed into the housing seat itself.

In the embodiments shown in the figures, the control lever 10 comprises at least one eyelet 13 which allows it to be connected to additional movement means of known type, such as cables, levers, or the like; it cannot be ruled out that the control lever 10 can be manually moved.

According to the invention, the control lever 10 is movable in rotation with respect to the fastening element 7 around at least one second axis Y which is transverse to the first axis X, to displace from the locking position to the home position and vice versa, where the first axis X and the second axis Y are incident with each other.

Preferably, the control lever 10 is directly associated with the fastening element 7. In other words, the control lever 10 is associated with the fastening element 7 without the interposition of intermediate elements. The first axis X and the second axis Y are therefore defined at the mutual interconnection area between the control lever 10 and the fastening element 7.

Generally, the control lever 10 has an elongated shape and the relevant longitudinal axis is identified in the figures with the reference letter Z. Advantageously, in the embodiments shown in the illustrations, the second axis Y substantially corresponds to the longitudinal axis Z of the control lever 10.

In an alternative embodiment, not shown in the figures, the second axis Y is arranged transverse to the longitudinal axis Z of the control lever 10. Appropriately, the control lever 10 comprises at least one abutment surface 14 adapted to operate in conjunction with the main body 2 in the locking position. The abutment surface 14 is separate and staggered with respect to the projection 12.

Preferably, the control lever 10 has an elongated shape and the abutment surface 14 is arranged laterally with respect to a first longitudinal median plane 15 oriented transversely with respect to the first axis X.

More in detail, the first median plane 15 is substantially (i.e. except for the machining tolerances) perpendicular to the first axis X.

In the embodiments shown in the figures, the connecting portion 10a of the control lever 10 has at least two side walls 16 arranged substantially (except for the machining tolerances) parallel to the first median plane 15 and comprises at least one rotating wall 17 which is inclined with respect to these side walls 16 and incident at least with one of them in such a way as to define the abutment surface 14.

The rotating wall 17 allows the control lever 10 to be rotated around the second axis Y to reach the locking position without therefore interfering with the fastening element 7.

The main body 2 in turn has at least one resting surface 18 adapted to operate in conjunction with the abutment surface 14 in the locking position of the control lever 10. The resting surface 18 delimits at least partly the second opening 5b. More particularly, the first median plane 15 is arranged substantially parallel to the resting surface 18 in the home position of the control lever 10 and is placed transversely to the resting surface itself when the control lever 10 is in the locking position.

Preferably, the control lever 10 has two abutment surfaces 14 arranged on opposite sides with respect to the first median plane 15.

In the embodiments shown in the figures, the two abutment surfaces 14 are arranged on opposite sides also with respect to a second longitudinal median plane 19 and perpendicular to the first median plane 15. The abutment surfaces 14 are therefore adapted to operate in conjunction with the respective resting surfaces 18 defined by the main body 2 and arranged on opposite sides of the control lever 10. The two resting surfaces 18 delimit both the second opening 5b and are arranged on opposite sides of the first median plane 15 with the control lever 10 in the home position.

The device 1 conveniently comprises kinematic connection means 20 of the control lever 10 to the fastening element 7.

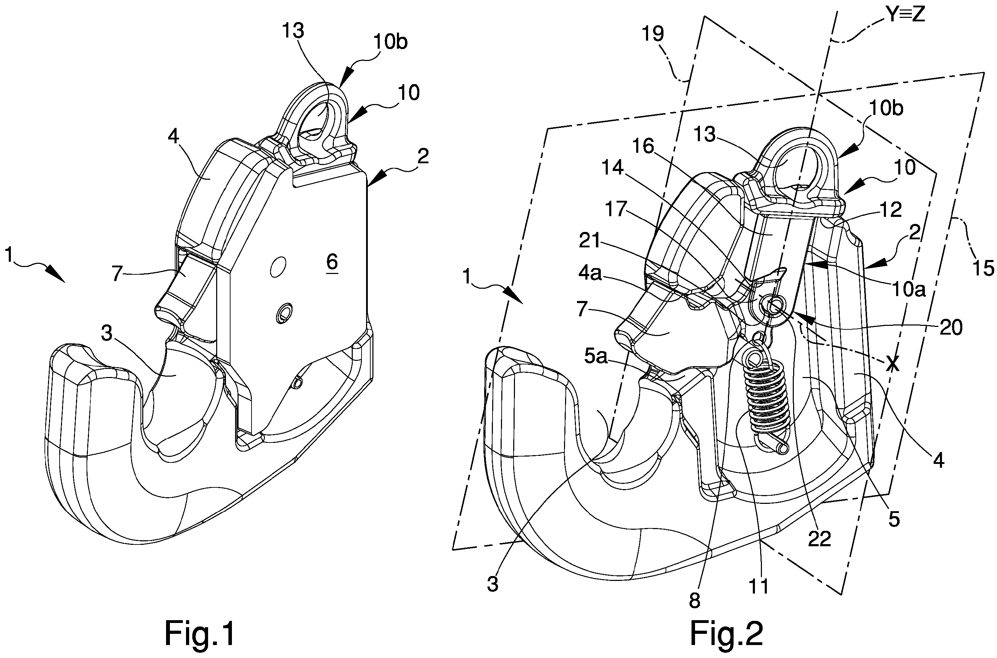

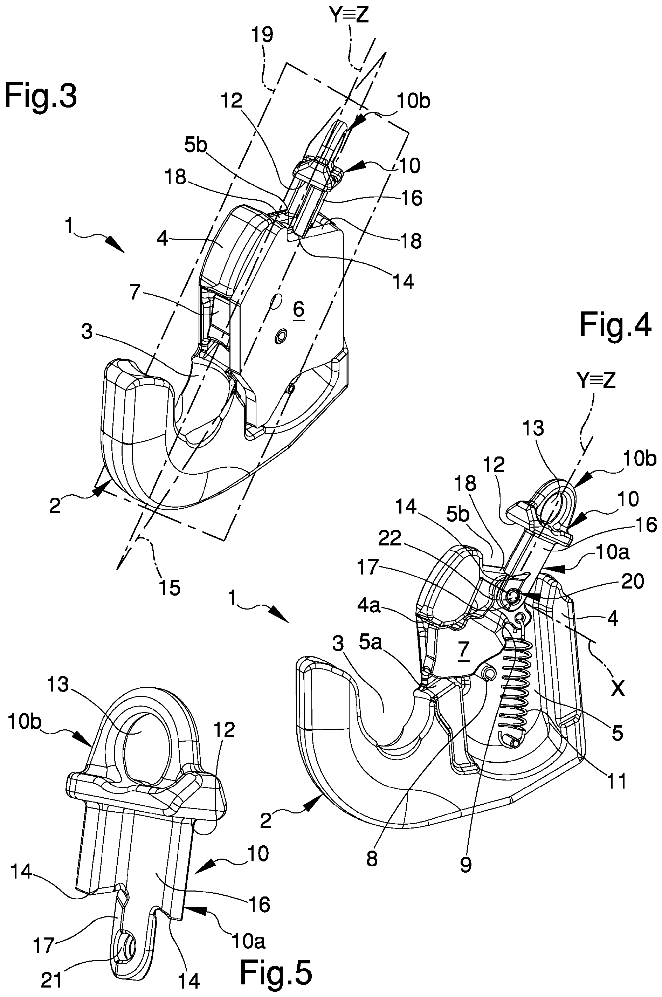

In the embodiments shown in Figures 2, 4 and 6, the connection means 20 comprise at least one slot 21 defined on at least one of the control lever 10 and the fastening element 7, and adapted to accommodate at least one corresponding pin 22 defined on the other of the control lever 10 and the fastening element 7. The slot 21, which is elongated in shape, is adapted to allow the control lever 10 to be rotated with respect to the fastening element 7 around the second axis Y. In these embodiments, the first axis X, around which the control lever 10 is rotated, is defined by the pin 22.

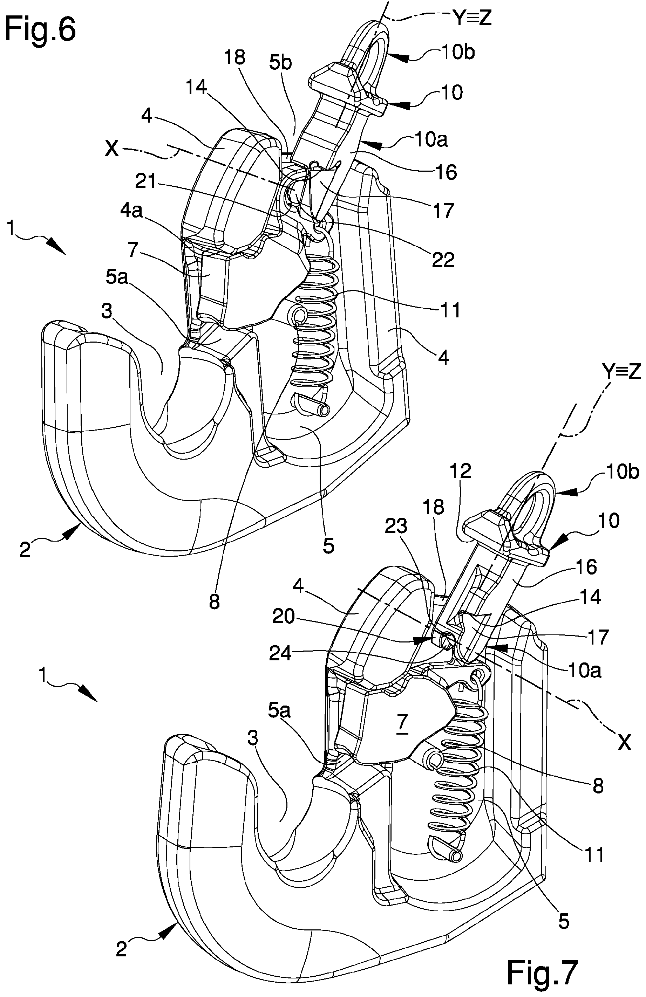

In the embodiments shown in Figures 1-4, the slot 21 is defined on the control lever 10 and the pin 22 is defined on the fastening element 7. In the alternative embodiment shown in Figure 6, on the other hand, the slot 21 is defined on the fastening element 7 and the pin 22 on the control lever 10.

In the embodiment shown in Figure 7, on the other hand, the connection means 20 are of the type of a spherical joint. More in detail, in this embodiment, the connection means 20 comprise at least one substantially spherical element 23 associated with one of the fastening element 7 and the control lever 10 and at least one relevant accommodation 24 adapted to accommodate this spherical element 23, which accommodation is associated with the other of the fastening element 7 and the control lever 10. In this embodiment, the first and the second axes X and Y both pass through the spherical joint.

The operation of the invention is as follows.

In normal operating conditions, the fastening element 7 is in the engagement configuration and the control lever 10 is arranged with its connecting portion 10a inside the main body 2.

When one wishes to engage the housing seat 3 with an apparatus to be towed, the control lever 10 is moved by means of its gripping portion 10b in such a way as to exert a pulling action directed outwards from the main body 2. The control lever 10 drives, by means of the connection means 20, the fastening element 7, thus causing a relevant rotary movement between them around the first axis X. As a result of the displacement of the control lever 10, the fastening element 7 reaches the release configuration, thereby freeing the housing seat 3 so that the apparatus to be towed can be inserted.

At this point, the control lever 10 can be rotated further with respect to the fastening element 7 around the second axis Y, so as to reach the locking position.

In particular, as a result of the rotation around the second axis Y, the abutment surfaces 14 interact with the resting surfaces 18, thus locking the position of the control lever 10 with respect to the main body 2. In this position, the abutment surfaces 14 therefore contact the main body 2 from opposite sides with respect to the second opening 5b.

After the apparatus to be towed has been placed inside the housing seat 3, the control lever 10 is returned to the home position and moved inwards the main body 2, so that the fastening element 7 returns to the engagement configuration. In the event of, with the control lever 10 in the locking position, the lever having to interact with an external body, as a result of the shock, a momentum would be generated that would cause the control lever itself to rotate around the second axis Y and, consequently, the return thereof to the home position. As a result of this rotation and of the force exerted by the elastic means 11, the control lever 10 therefore returns inside the main body 2 and the fastening element 7 returns to the engagement position.

To remove the apparatus to be towed from the housing seat 3, proceed in the same way as described above for its insertion, i.e. the fastening element 7 has to be moved from the engagement configuration to the release configuration in order to free the housing seat 3 and proceed with the removal of the apparatus to be towed. Subsequently, the fastening element 7 can be brought back to the engagement configuration as a result of the return action of the elastic means 11.

It has in practice been ascertained that the described invention achieves the intended objects and in particular it is underlined the fact that the present fastening device for towing vehicles allows the practical and safe fastening of an apparatus to be towed.

In particular, the device according to the invention, as a result of the rotation thereof around a second transverse axis with respect to the first axis, allows considerably reducing the risk of damage due to the shock with external bodies. Finally, the device according to the invention is of simple construction and provides for the construction of a smaller number of components than the devices of known type.

The conformation of the device and the arrangement of the elements therein facilitate the assembly and maintenance thereof, thus allowing the reduction in the time and costs related to the interventions adapted to restore the functionality thereof.

## Claims

1. Fastening device (1) for towing vehicles comprising:
- at least one main body (2) comprising at least one housing seat (3) for an apparatus to be towed;
- at least one fastening element (7) associated in a movable manner with said main body (2) between at least one release configuration, in which it releases said housing seat (3) to allow the insertion/removal of said apparatus to be towed, and at least one engagement configuration, in which it obstructs at least partly said housing seat (3) to prevent the removal of said apparatus to be towed;
- at least one control lever (10) connected at least in rotation to said fastening element (7) around a first axis (X), and movable with respect to said main body (2) to displace said fastening element (7) from the engagement configuration to the release configuration and vice versa, said control lever (10) being further movable between a locking position, in which it operates in conjunction with said main body (2) to keep said fastening element (7) in the release configuration, and a home position, in which it is movable with respect to said main body (2) to allow the displacement of said fastening element (7);
**characterized by** the fact that said control lever (10) is movable in rotation with respect to said fastening element (7) around at least a second axis (Y) which is transverse to said first axis (X), to displace from the locking position to the home position and vice versa, where said first axis (X) and said second axis (Y) are incident with each other.

2. Device (1) according to claim 1, **characterized by** the fact that said control lever (10) is directly associated with said fastening element (7).

3. Device (1) according to claim 1 or 2, **characterized by** the fact that said control lever (10) has an elongated shape and by the fact that said second axis (Y) substantially corresponds to the longitudinal axis (Z) of the control lever itself.

4. Device (1) according to claim 1 or 2, **characterized by** the fact that said control lever (10) has an elongated shape and by the fact that said second axis (Y) is arranged substantially transverse with respect to the longitudinal axis (Z) of the control lever itself.

5. Device (1) according to one or more of the preceding claims, **characterized by** the fact that said control lever (10) comprises at least one abutment surface (14) adapted to operate in conjunction with said main body (2) in the locking position.

6. Device (1) according to claim 3 or 4 and claim 5, **characterized by** the fact that said abutment surface (14) is arranged laterally with respect to a first longitudinal median plane (15) of said control lever (10) oriented transversely with respect to said first axis (X).

7. Device (1) according to one or more of the preceding claims, **characterized by** the fact that said control lever (10) comprises at least one connecting portion (10a) with said fastening element (7) and at least one gripping portion (10b), where said connecting portion (10a) and said gripping portion (10b) are adapted to be contained inside said main body (2) and to protrude from said main body (2) respectively, when the fastening element itself is in the engagement configuration.

8. Device (1) according to claims 6 and 7, **characterized by** the fact that said connecting portion (10a) has at least two side walls (16) arranged substantially parallel to said first median plane (15) and comprises at least one rotating wall (17) which is inclined with respect to said side walls (16) and incident at least one of them in such a way as to define said abutment surface (14).

9. Device (1) according to one or more of claims 6 to 8, **characterized by** the fact that said main body (2) has at least one resting surface (18) adapted to operate in conjunction with said abutment surface (14) in the locking position of said control lever (10), said first median plane (15) being arranged substantially parallel to said resting surface (18) in the home position and being placed transversally to said resting surface (18) in the locking position.

10. Device (1) according to one or more of claims 6 to 9, **characterized by** the fact that it comprises at least one pair of said abutment surfaces (14) arranged on opposite sides with respect to said first median plane (15).

11. Device (1) according to claim 10, **characterized by** the fact that said abutment surfaces (14) are arranged on opposite sides with respect to a second longitudinal median plane (19) perpendicular to said first median plane (15).

12. Device (1) according to one or more of claims 5 to 11, **characterized by** the fact that said control lever (10) comprises at least one projection (12) which is adapted to contact said main body (2) when said fastening element (7) is in the engagement configuration and by the fact that said abutment surface (14) is separate and staggered with respect to said projection (12).

13. Device (1) according to one or more of the preceding claims, **characterized by** the fact that it comprises kinematic connection means (20) of said control lever (10) to said fastening element (7).

14. Device (1) according to claim 13, **characterized by** the fact that said connection means (20) comprise at least one slot (21) defined on at least one of said control lever (10) and said fastening element (7), and adapted to accommodate at least one corresponding pin (22) defined on the other of said control lever (10) and said fastening element (7).

15. Device (1) according to claim 14, **characterized by** the fact that said slot (21) is defined on said control lever (10) and said pin (22) is defined on said fastening element (7).

## Patentansprüche

1. Befestigungsvorrichtung (1) für Zugfahrzeuge, umfassend:
- mindestens einen Hauptkörper (2) mit mindestens einem Gehäusesitz (3) für ein zu ziehendes Gerät;
- mindestens ein Befestigungselement (7), das mit dem Hauptkörper (2) zwischen mindestens einer Freigabekonfiguration, in der es den Gehäusesitz (3) freigibt, um das Einsetzen/Entfernen des zu ziehenden Geräts zu ermöglichen, und mindestens einer Eingriffskonfiguration beweglich verbunden ist, in der es den Gehäusesitz (3) zumindest teilweise blockiert, um das Entfernen des zu ziehenden Geräts zu verhindern;
- mindestens einen Steuerhebel (10), der zumindest um eine erste Achse (X) drehbar mit dem Befestigungselement (7) verbunden und bezüglich des Hauptkörpers (2) beweglich ist, um das Befestigungselement (7) aus der Eingriffskonfiguration in die Freigabekonfiguration und umgekehrt zu verschieben, wobei der Steuerhebel (10) ferner zwischen einer Verriegelungsposition, in der er in Verbindung mit dem Hauptkörper (2) wirkt, um das Befestigungselement (7) in der Freigabekonfiguration zu halten, und einer Ausgangsposition bewegbar ist, in der er bezüglich des Hauptkörpers (2) bewegbar ist, um die Verschiebung des Befestigungselements (7) zu ermöglichen;
**dadurch gekennzeichnet, dass** der Steuerhebel (10) bezüglich des Befestigungselements (7) um mindestens eine zweite Achse (Y) drehbar ist, die quer zu der ersten Achse (X) ist, sodass er sich von der Verriegelungsposition in die Ausgangsposition und umgekehrt verschiebt, wobei die erste Achse (X) und die zweite Achse (Y) senkrecht zueinander sind.

2. Vorrichtung (1) nach Anspruch 1, **dadurch gekennzeichnet, dass** der Steuerhebel (10) mit dem Befestigungselement (7) direkt verbunden ist.

3. Vorrichtung (1) nach Anspruch 1 oder 2, **dadurch gekennzeichnet, dass** der Steuerhebel (10) eine längliche Form hat und dadurch, dass die zweite Achse (Y) im Wesentlichen der Längsachse (Z) des Steuerhebels selbst entspricht.

4. Vorrichtung (1) nach Anspruch 1 oder 2, **dadurch gekennzeichnet, dass** der Steuerhebel (10) eine längliche Form hat und dass die zweite Achse (Y) im Wesentlichen quer zu der Längsachse (Z) des Steuerhebels selbst angeordnet ist.

5. Vorrichtung (1) nach einem oder mehreren der vorhergehenden Ansprüche, **dadurch gekennzeichnet, dass** der Steuerhebel (10) mindestens eine Anschlagfläche (14) aufweist, die ausgebildet ist, in Verbindung mit dem Hauptkörper (2) in der Verriegelungsposition zu wirken.

6. Vorrichtung (1) nach Anspruch 3 oder 4 und Anspruch 5, **dadurch gekennzeichnet, dass** die Anschlagfläche (14) seitlich bezüglich einer ersten Längsmittelebene (15) des Steuerhebels (10) angeordnet ist, die quer zu der ersten Achse (X) ausgerichtet ist.

7. Vorrichtung (1) nach einem oder mehreren der vorhergehenden Ansprüche, **dadurch gekennzeichnet, dass** der Steuerhebel (10) mindestens einen Abschnitt (10a) zum Verbinden mit dem Befestigungselement (7) und mindestens einen Greifabschnitt (10b) umfasst, wobei der Verbindungsabschnitt (10a) und der Greifabschnitt (10b) ausgebildet sind, innerhalb des Hauptkörpers (2) aufgenommen zu werden und aus dem Hauptkörper (2) herauszuragen, wenn das Befestigungselement selbst in der Eingriffskonfiguration ist.

8. Vorrichtung (1) nach den Ansprüchen 6 und 7, **dadurch gekennzeichnet, dass** der Verbindungsabschnitt (10a) mindestens zwei Seitenwände (16) hat, die im Wesentlichen parallel zu der ersten Mittelebene (15) angeordnet sind, und mindestens eine Drehwand (17) umfasst, die bezüglich der Seitenwände (16) geneigt ist und auf mindestens eine von ihnen auftrifft, um die Anschlagfläche (14) zu definieren.

9. Vorrichtung (1) nach einem oder mehreren der Ansprüche 6 bis 8, **dadurch gekennzeichnet, dass** der Hauptkörper (2) mindestens eine Auflagefläche (18) hat, die ausgebildet ist, in Verbindung mit der Anschlagfläche (14) in der Verriegelungsposition des Steuerhebels (10) zusammenzuwirken, wobei die erste Mittelebene (15) in der Ausgangsposition im Wesentlichen parallel zu der Auflagefläche (18) angeordnet ist und in der Verriegelungsposition quer zu der Auflagefläche (18) verläuft.

10. Vorrichtung (1) nach einem oder mehreren der Ansprüche 6 bis 9, **dadurch gekennzeichnet, dass** sie mindestens ein Paar der Anschlagflächen (14) umfasst, die auf gegenüberliegenden Seiten bezüglich der ersten Mittelebene (15) angeordnet sind.

11. Vorrichtung (1) nach Anspruch 10, **dadurch gekennzeichnet, dass** die Anschlagflächen (14) auf gegenüberliegenden Seiten bezüglich einer zweiten Längsmittelebene (19) angeordnet sind, die senkrecht zu der ersten Mittelebene (15) steht.

12. Vorrichtung (1) nach einem oder mehreren der Ansprüche 5 bis 11, **dadurch gekennzeichnet, dass** der Steuerhebel (10) mindestens einen Vorsprung (12) umfasst, der ausgebildet ist, mit dem Hauptkörper (2) in Kontakt zu treten, wenn sich das Befestigungselement (7) in der Eingriffskonfiguration befindet, und dadurch, dass die Anschlagflächen (14) bezüglich des Vorsprungs (12) separat und versetzt angeordnet ist.

13. Vorrichtung (1) nach einem oder mehreren der vorhergehenden Ansprüche, **dadurch gekennzeichnet, dass** sie kinematische Mittel (20) zum Verbinden des Steuerhebels (10) mit dem Befestigungselement (7) umfasst.

14. Vorrichtung (1) nach Anspruch 13, **dadurch gekennzeichnet, dass** die Verbindungsmittel (20) mindestens einen Schlitz (21) umfassen, der an einem von Steuerhebel (10) und Befestigungselement (7) angeordnet ist und zur Aufnahme mindestens eines entsprechenden Stifts (22) ausgebildet ist, der an dem anderen von Steuerhebel (10) und Befestigungselement (7) angeordnet ist.

15. Vorrichtung (1) nach Anspruch 14, **dadurch gekennzeichnet, dass** der Schlitz (21) an dem Steuerhebel (10) angeordnet ist und der Stift (22) an dem Befestigungselement (7) angeordnet ist.

## Revendications

1. - Dispositif de fixation (1) pour remorquer des véhicules comprenant :
- au moins un corps principal (2) comprenant au moins un siège de logement (3) pour un appareil à remorquer ;
- au moins un élément de fixation (7) associé de manière mobile audit corps principal (2) entre au moins une configuration de libération, dans laquelle il libère ledit siège de logement (3) pour permettre l'insertion/le retrait dudit appareil à remorquer, et au moins une configuration de mise en prise, dans laquelle il obstrue au moins partiellement ledit siège de logement (3) pour empêcher le retrait dudit appareil à remorquer ;
- au moins un levier de commande (10) relié au moins en rotation audit élément de fixation (7) autour d'un premier axe (X), et mobile par rapport audit corps principal (2) pour déplacer ledit élément de fixation (7) de la configuration de mise en prise à la configuration de libération et réciproquement, ledit levier de commande (10) étant en outre mobile entre une position de verrouillage, dans laquelle il fonctionne conjointement avec ledit corps principal (2) pour maintenir ledit élément de fixation (7) dans la configuration de libération, et une position de repos, dans laquelle il est mobile par rapport audit corps principal (2) pour permettre le déplacement dudit élément de fixation (7) ;
**caractérisé par le fait que** ledit levier de commande (10) est mobile en rotation par rapport audit élément de fixation (7) autour d'au moins un second axe (Y) qui est transversal audit premier axe (X), pour se déplacer de la position de verrouillage à la position de repos et réciproquement, où ledit premier axe (X) et ledit second axe (Y) sont incidents l'un par rapport à l'autre.

2. - Dispositif (1) selon la revendication 1, **caractérisé par le fait que** ledit levier de commande (10) est directement associé audit élément de fixation (7).

3. - Dispositif (1) selon la revendication 1 ou 2, **caractérisé par le fait que** ledit levier de commande (10) a une forme allongée et **par le fait que** ledit second axe (Y) correspond sensiblement à l'axe longitudinal (Z) du levier de commande lui-même.

4. - Dispositif (1) selon la revendication 1 ou 2, **caractérisé par le fait que** ledit levier de commande (10) a une forme allongée et **par le fait que** ledit second axe (Y) est disposé sensiblement transversalement par rapport à l'axe longitudinal (Z) du levier de commande lui-même.

5. - Dispositif (1) selon l'une ou plusieurs des revendications précédentes, **caractérisé par le fait que** ledit levier de commande (10) comprend au moins une surface de butée (14) apte à fonctionner conjointement avec ledit corps principal (2) dans la position de verrouillage.

6. - Dispositif (1) selon la revendication 3 ou 4 et la revendication 5, **caractérisé par le fait que** ladite surface de butée (14) est disposée latéralement par rapport à un premier plan médian longitudinal (15) dudit levier de commande (10) orienté transversalement par rapport audit premier axe (X).

7. - Dispositif (1) selon l'une ou plusieurs des revendications précédentes, **caractérisé par le fait que** ledit levier de commande (10) comprend au moins une partie de liaison (10a) avec ledit élément de fixation (7) et au moins une partie de préhension (10b), où ladite partie de liaison (10a) et ladite partie de préhension (10b) sont aptes à être contenues à l'intérieur dudit corps principal (2) et pour faire saillie respectivement à partir dudit corps principal (2), lorsque l'élément de fixation lui-même est dans la configuration de mise en prise.

8. - Dispositif (1) selon les revendications 6 et 7, **caractérisé par le fait que** ladite partie de liaison (10a) présente au moins deux parois latérales (16) disposées sensiblement parallèlement audit premier plan médian (15) et comprend au moins une paroi rotative (17) qui est inclinée par rapport auxdites parois latérales (16) et incidente par rapport à au moins l'une d'entre elles de manière à définir ladite surface de butée (14).

9. - Dispositif (1) selon l'une ou plusieurs des revendications 6 à 8, **caractérisé par le fait que** ledit corps principal (2) présente au moins une surface d'appui (18) apte à fonctionner conjointement avec ladite surface de butée (14) dans la position de verrouillage dudit levier de commande (10), ledit premier plan médian (15) étant disposé sensiblement parallèlement à ladite surface d'appui (18) dans la position de repos et étant placé transversalement à ladite surface d'appui (18) dans la position de verrouillage.

10. - Dispositif (1) selon l'une ou plusieurs des revendications 6 à 9, **caractérisé par le fait qu'**il comprend au moins une paire desdites surfaces de butée (14) disposées sur des côtés opposés par rapport audit premier plan médian (15).

11. - Dispositif (1) selon la revendication 10, **caractérisé par le fait que** lesdites surfaces de butée (14) sont disposées sur des côtés opposés par rapport à un second plan médian longitudinal (19) perpendiculaire audit premier plan médian (15).

12. - Dispositif (1) selon l'une ou plusieurs des revendications 5 à 11, **caractérisé par le fait que** ledit levier de commande (10) comprend au moins une saillie (12) qui est apte à entrer en contact avec ledit corps principal (2) lorsque ledit élément de fixation (7) est dans la configuration de mise en prise et **par le fait que** ladite surface de butée (14) est séparée et décalée par rapport à ladite saillie (12).

13. - Dispositif (1) selon l'une ou plusieurs des revendications précédentes, **caractérisé par le fait qu'**il comprend des moyens de liaison cinématique (20) dudit levier de commande (10) audit élément de fixation (7).

14. - Dispositif (1) selon la revendication 13, **caractérisé par le fait que** lesdits moyens de liaison (20) comprennent au moins une fente (21) définie sur au moins l'un dudit levier de commande (10) et dudit élément de fixation (7), et apte à recevoir au moins une broche correspondante (22) définie sur l'autre dudit levier de commande (10) et dudit élément de fixation (7).

15. - Dispositif (1) selon la revendication 14, **caractérisé par le fait que** ladite fente (21) est définie sur ledit levier de commande (10) et ladite broche (22) est définie sur ledit élément de fixation (7).
